(19) Europäisches Patentamt

European Patent Office

Office européen des brevets

(11) **EP 1 715 126 A2**

(12) **EUROPEAN PATENT APPLICATION**

(43) Date of publication:
25.10.2006 Bulletin 2006/43

(51) Int Cl.:
*E05F 1/10* (2006.01)

(21) Application number: **06250242.2**

(22) Date of filing: **18.01.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (74) Representative: **Every, David Aidan et al**<br>**MARKS & CLERK,**<br>**Sussex House,**<br>**83-85 Mosley Street**<br>**Manchester M2 3LG (GB)** |
| (30) Priority: **05.03.2005 GB 0504631** | Remarks:<br>•La revendication 34 est reputée abandonnée pour défaut de paiement de la taxe de revendication (règle 31 (2) CBE).<br>•Claim 34 is deemed to be abandoned due to non-payment of the claims fee (Rule 31 (2) EPC). |
| (71) Applicant: **RENOLD Plc**<br>**Wythenshawe**<br>**Manchester M22 5WL (GB)** | |
| (72) Inventor: **Wanga, Xianfa**<br>**Lindley, Huddersfield HD3 4BH (GB)** | |

(54) **Door closer device**

(57)      A door closer device for connection between a door leaf and a door frame serves to automatically close the door after opening. The device has a housing that is received in the door leaf and a chain have one end connected inside the housing and the other end connected to the door frame. A spring connects the chain to the housing and serves to urge the chain into the housing bore. The chain links are pivotally connected plates with opposed side edges arranged such that a side edge of a link faces a corresponding side edge of an adjacent link. Each side edge defines a first portion and a second portion. The facing first portions of adjacent links are adapted to come into abutment when the links are arranged such that the longitudinal axis of the chain extends substantially in a straight line so as to prevent the links from pivoting in a first direction. The facing second portions of adjacent links are adapted to come into abutment when the links are pivoted in a second direction opposite to the first direction such that the articulation is limited and the links describe a line that substantially follows an arc.

FIG 2

## Description

The present invention relates to a door closer device for assisting in moving a door leaf from an open to a closed position relative to a supporting door frame.

Door closers of the kind incorporating chains are generally designed to operate between the hinged side edge of the door leaf and the door jamb such that they are concealed when the door is closed and relatively inconspicuous when the door is open. Closers of this kind comprise a small plate link chain that is connected between the door and the door frame and is designed to be under tension so as to urge the door to a closed position. The chain is typically anchored at one end to the door frame by an end plate that is screwed to the door jamb. The other end of the chain is received in a cylindrical housing that is fixedly disposed in a bore in the door leaf. The chain is connected to the housing via a tension coil spring that serves to bias it into the housing in order to pull the door closed.

The chain in closers of this kind comprises a plurality of interleaved link plates that are interconnected by transverse, parallel pins at overlapping portions of the plates so that the links can pivot about the longitudinal axis of the pins.

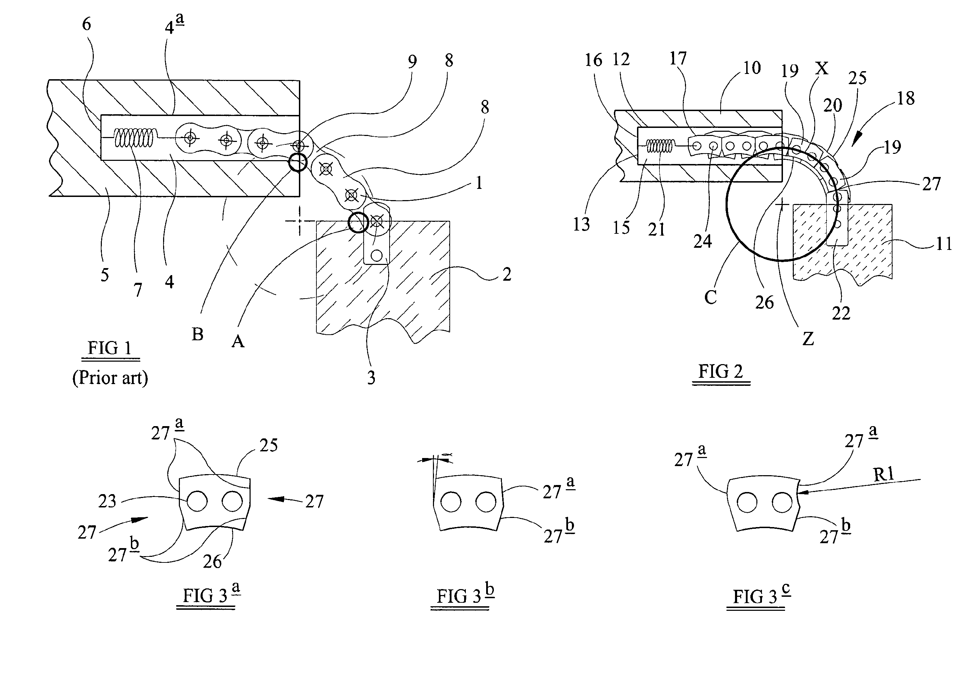

An example of a prior art door closer using a roller chain is illustrated in figure 1. The roller chain 1 is of conventional design and is connected at one end to the door frame 2 by an anchoring plate 3 and the other end is received in a bore 4 in the door leaf 5. The bore 4 may be defined in a housing 4a received in the door leaf. The chain 1 is connected to a surface 6 defining the end of the bore 4 via a coiled tension spring 7 that biases the chain into the bore. The roller chain 1 is articulated in the link plates 8 are pivotally connected by transverse chain pins 9. A problem with chain-operated door closers is that the degree of articulation of the links in the chain results in the plates 8 rubbing against the edge of the door frame 2 and the housing 4a (as can be seen in the regions labelled A and B in figure 1). This impairs the efficiency of operation of the closer. Moreover, when used on doors that open beyond a $90^0$ angle the efficacy of the chain is further compromised to an extent that when the door is opened to around 180° the closer is ineffective.

One known alternative prior art design tries to mitigate this problem by limiting the amount of articulation of a given link relative to the next in one direction. This ensures that the chain forms an arc similar to that of the door path and therefore does not foul the door in normal use.

A further drawback of chain-operated door closers is that since a chain supports only tensile forces, it does not serve to constrain the motion of the door towards the closed position. For example, if there were an external force, such as a gust of wind, then the chain would buckle and allow the door to swing rapidly to the closed position. It will be apparent that this is potentially dangerous as the closing door may have significant momentum that is directed into the path of users. In the case of the chain with limited articulation such as that described above, the chain has a tendency to kink when the door is forced to the closed position. This can result in the closer mechanism becoming fouled as the edges of the chain links hit the edges of the housing. The contact between the chain links and the housing will cause the door to stop suddenly. Since the door can have significant momentum as it is forced shut sometimes the magnitude of the force involved is large enough to cause failure of the hinges or damage the door.

Other chain-operated door closers use a leaf chain in which identical link plates are interleaved across the full width of the chain and interconnected on transverse pins. These suffer from the same drawbacks as those described above.

It is an object of the present invention to obviate or mitigate the aforesaid disadvantages.

According to a first aspect of the present invention there is provided a door closer device for connection between a door leaf and a door frame, the closer device comprising a housing for receipt in one of the door leaf or the door frame, a chain defining a longitudinal axis and having a first end that is connected to the housing and a second end adapted to connect to the other of the door frame or the door leaf, and a biasing member acting between the chain and the housing so as to urge the chain into the housing, the chain comprising a plurality of pivotally connected links each having a pair of opposed side edges arranged such that a side edge of a link faces a corresponding side edge of an adjacent link, each side edge defining a first portion and a second portion, the facing first portions of adjacent links being adapted to come into abutment when the links are arranged such that the longitudinal axis of the chain extends substantially in a straight line so as to prevent the links from pivoting in a first direction, and facing second portions of adjacent links being adapted to come into abutment when the links are pivoted in a second direction opposite to the first direction such that the articulation is limited and the links describe a line that substantially follows an arc.

The arrangement of the links is such that their pivotal movement is restricted so as to limit the degree of "bending" of the chain as a whole. The door closer chain has a limited degree of bending in one direction so that it describes a curve when the door leaf is opened in that direction and an anti-back bend feature to prevent the door leaf opening in the other direction and to prevent cranking of the chain under an external load that tends to close the door. This serves to reduce the risk of the chain rubbing against the housing and also prevent the chain from being damaged in the event that an external force is applied to close the door.

The chain links may be interconnected by a plurality of transverse pins that pass through apertures in the links. The longitudinal axis extends in parallel to the imaginary line between the centres of the pins.

The apertures are ideally formed in overlapping parts of the links.

The first end of the chain is preferably connected to the housing via said biasing member. The connection may be to a closed end of the housing.

The biasing member may be a spring, preferably a coiled tension spring.

The housing is preferably disposed in a bore in the door.

The housing preferably defines a bore in which said first end of the chain is received. The biasing member is also preferably received in the housing bore.

The first portions of the side edge of the chain links may be disposed normal to the longitudinal axis of the chain. Although in alternative embodiments they may be inclined to the normal at an acute or obtuse angle. The facing first portions preferably have complementary inclinations so that the links are prevented from pivoting in said first direction when the longitudinal axis of the chain extends substantially in a straight line. The first portions may be rectilinear or may be arcuate.

The second portions are preferably inclined to the normal to the longitudinal axis of the chain. The facing second portions being incline in opposite directions.

The chain links further comprise back edges that extend between said first portions of the side edges and front edges that extend between the second portions of the side edges. The back and front edges may be wholly or partially arcuate or straight.

The chain preferably comprises inner and outer links, the outer links being of reduced height compared to the inner links. The outer links are preferably thicker than the inner links. The links are ideally in the form of plates.

According to a second aspect of the present invention there is provided a door closer device for connection between a door leaf and a door frame, the closer device comprising a housing for receipt in one of the door leaf or the door frame, a chain defining a longitudinal axis and having a first end that is connected to the housing and a second end adapted to connect to the other of the door frame or the door leaf, and a biasing member acting between the chain and the housing so as to urge the chain into the housing, the chain comprising a plurality of pivotally connected inner and outer links, the outer link plates having a height less than that of the inner link plates.

This arrangement provides for greater clearance between the chain and the housing.

The outer link plates are preferably thicker than the inner link plates.

The housing preferably defines a bore into which the chain is urged.

The chain links may be interconnected by a plurality of transverse pins that pass through apertures in the links. The longitudinal axis extends in parallel to the imaginary line between the centres of the pins.

The apertures are ideally formed in overlapping parts of the links.

The first end of the chain is preferably connected to the housing via said biasing member. The connection may be to a closed end of the housing.

The relationship between the inner and outer links preferably accords to the following formula:

$$h1 = a.h2$$

$$t2 = a^2.t1$$

where h1 is the height of the inner link plate, t1 is the thickness of the inner link plate, h2 is the height of the outer link plate, t2 is the thickness of the outer link plate, and a is a constant in the range 1.1 to 1.5.

Specific embodiments of the present invention will now be described, by way of example only, with reference to the accompanying drawings in which:

Figure 1 is a schematic representation of a door closer of the prior art;
Figure 2 is a part-sectioned plan view of a door closer device of the present invention;
Figures 3a to 3c show exemplary chain link plate embodiments that can be used in the door closer device of the present invention;
Figures 4a and 4b show front and end views of inner and outer link plates of one embodiment of the a door closer chain;
Figure 4c is a diagrammatic representation of the door closer chain of figures 4a and 4b in a bore of a door; and
Figures 5a to 5d illustrate further alternative configurations of the link plates of the door closer chain of the present invention.

Referring now to figure 2 of the drawings, the door closer device is illustrated in operation between the hinged edge of a door leaf 10 and a door jamb 11 of a door frame. The device has a cylindrical housing 12 that is fixedly received in a blind bore 13 in the door leaf 10 and defines a bore 15 that is closed at one end 16 and in which one end 17 of a closer chain 18 is received. The chain is comprised of a plurality of articulated links 19, 20 and is connected between the closed end 16 of the housing 12 and the door jamb 11. One end 17 of the chain 18 is secured to the closed end 16 of the housing by a coiled tension spring 21 and the other end of the chain is fixed to the door jamb 11 by an anchoring plate 22.

The chain has a plurality of interleaved inner and outer flat link plates 20, 19. Each of the link plates has two spaced pin apertures 23 (figure 3) that are designed to receive parallel transverse pins 24. The outer link plates 19 are offset on each side from the inner link plates 20 such that they overlap adjacent pairs of inner link plates 20 and are connected thereto by means of the pins 24 passing through the aligned apertures 23. The outer link plates 19 are typically fixed relative to the pins 24 by a friction (interference) fit and the inner link plates 20 are free to rotate on the pins 24, the arrangement allowing the chain links to pivot.

The periphery of each link plate 19, 20 defines back, front and side edges 25, 26, 27 and it is the shape of the latter that is designed to govern the behaviour of the chain during articulation. As can be seen in figure 2, the side edges 27 are designed to limit the articulation of the links in such a way that the longitudinal axis X (i.e. an imaginary line that passes through the centres of the pins) of the chain, in the region between the door jamb 11 and the door leaf 10, describes a line that approximates to an arc of an imaginary circle C having centre Z. It will be appreciated that since this line is composed of multiple straight lines between the pin centres it is, in reality, composed of a plurality of chords of that circle.

The arrangement allows the door to be opened through an angle of 180° with the pivoting action of the chain links continuing to be restricted so that the chain follows an arcuate path and for the closer to be effective.

The side edges 27 of the link plates 19, 20, shown in more detail in figure 3a, have first parallel portions 27a extending from the back edge 25 at a normal to the longitudinal axis of the chain and converging second portions 27b that extend between the first portions 27a and the front edge 26 and are inclined to the normal. In use, when the links of a chain are arranged to extend in a straight line, the first portions 27a of the side edges of adjacent link plates are in abutment and so prevent the links from articulating relative to one another in one direction (as illustrated by the first three outer link plates 19 at the end 17 of the chain as shown on the left in figure 2). This serves to provide an "anti back bend" feature whereby the chain cannot bend beyond a straight line in one direction.

The second portions 27b on the side edges of adjacent links allow only limited bending of the chain in the opposite direction before they come into abutment (as shown in figure 2), so that the longitudinal axis X of the chain describes a line that approximates to arc of a circle C as illustrated in figure 2.

It will be appreciated that the profile of the chain links can be varied and the same result can still be attained. For example, the closer chain may comprise link plates having a shape shown in figure 3b where the first portions 27a are still parallel but are inclined at the same angle $\alpha$ to the normal of the line between pin centres. The second side edge portions 27b are unchanged compared to the link of figure 3a. In figure 3c the first side edge portions 27a describe complementary curves with a radius R1 whereas the second portions 27b are again unchanged.

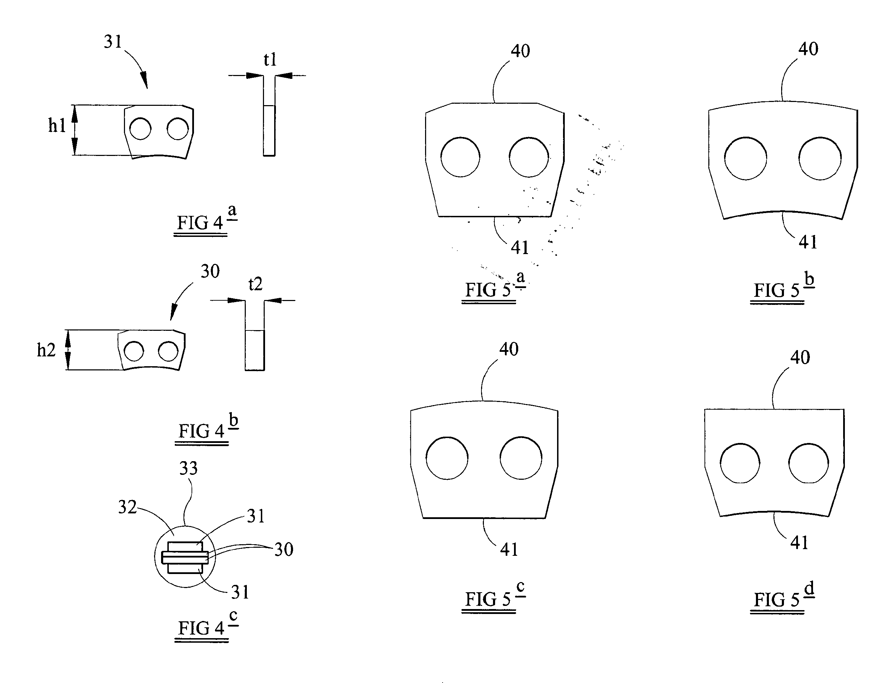

An alternative chain link profile is illustrated in figures 4a, 4b and 4c. In this chain the inner and outer link plates 30, 31 are of different heights and thicknesses. The inner link plate 31, shown in figure 4a has a height h1 and thickness t1 whereas the outer link plate 30, shown in figure 4b, has a reduced height h2 and increased thickness t2. The effect of this in relation to the door closer device is illustrated in figure 4c where the chain is shown in section inside the bore 32 of the housing 33. It will be appreciated that in comparison to a prior art chain, which has inner and outer link plates of the same height and thickness, this chain offers greater clearance in the bore by virtue of the reduced height of the outer links 31 and is therefore more suited to small bores where space is at a premium. The greater clearance can be ascertained by drawing an imaginary circle circumscribing the chain section shown in figure 4c and comparing this to the larger circle of a prior art chain. The reduced height h2 of the outer link plate is compensated by the increased thickness t2 so that the respective strengths of the inner and outer link plates are comparable.

The dimension of the outer and inner link pates is as follows:

$$h1 = a.h2$$

$$t2 = a^2.t1$$

For a general design a = 1.1 - 1.5
For an optimum design a = 1.3

For any of the designs described above the shape of the back and/or front edges 40, 41 of the plates may be curved to follow the arc described by the chain as shown in figure 2. This curvature reduces the risk of the plate corners catching on the edge of the bore in the door leaf. Alternatively, a combination of straight and curved side edges could be used to balance this risk of catching with the reduced strength that results from having the curved surfaces. As a further alternative only the ends (i.e. those regions closest to the side edges) of the back edge may be curved and the rest of that edge substantially straight. Examples of plate link profiles are shown in figures 5a to 5d.

It will be appreciated that numerous modifications to the above described design may be made without departing from the scope of the invention as defined in the appended claims.

**Claims**

1. A door closer device for connection between a door leaf and a door frame, the closer device comprising a housing for receipt in one of the door leaf or the door frame, a chain defining a longitudinal axis and having a first end that is connected to the housing and a second end adapted to connect to the other of the door frame or the door leaf, and a biasing member acting between the chain and the housing so as to urge the chain into the housing, the chain comprising a plurality of pivotally connected links each having a pair of opposed side edges arranged such that a side edge of a link faces a corresponding side edge of an adjacent link, each side edge defining a first portion and a second portion, the facing first portions of adjacent links being adapted to come into abutment when the links are arranged such that the longitudinal axis of the chain extends substantially in a straight line so as to prevent the links from pivoting in a first direction, and facing second portions of adjacent links being adapted to come into abutment when the links are pivoted in a second direction opposite to the first direction such that the articulation is limited and the links describe a line that substantially follows an arc.

2. A door closer device according to claim 1, wherein the chain links are interconnected by transverse pins that pass through apertures in the links.

3. A door closer device according to claim 1 or 2, wherein the apertures are formed in overlapping parts of the links.

4. A door closer device according to claim 1,2 or 3, wherein the first end of the chain is connected to the housing via said biasing member.

5. A door closer device according to claim 4, wherein the first end is connected to a closed end of the housing.

6. A door closer device according to any preceding claim, wherein the biasing member is a spring.

7. A door closer device according to claim 6, wherein the spring is a coiled tension spring.

8. A door closer device according to any preceding claim, wherein the housing is disposed in a cavity in the door.

9. A door closer device according to claim 8, wherein the cavity is a bore.

10. A door closer device according to any preceding claim, wherein the housing defines a bore in which said first end of the chain is received.

11. A door closer device according any preceding claim, wherein the housing defines a bore in which biasing member is received.

12. A door closer device according to any preceding claim, wherein the first portions of the side edges of a link are substantially parallel.

13. A door closer device according to any preceding claim, wherein the first portions of the side edges of the chain links are disposed normal to the longitudinal axis of the chain.

14. A door closer device according to any one of claims 1 to 12, wherein the first portions of the side edges of the chain links are inclined to the normal of the longitudinal axis of the chain at an acute or obtuse angle.

15. A door closer device according to any preceding claim, wherein the facing first portions have complementary inclinations so that the links are prevented from pivoting in said first direction when the longitudinal axis of the chain extends substantially in a straight line.

16. A door closer device according to any one of claims 1 to 11 wherein the first portions of the side edges are rectilinear.

17. A door closer device according to claim 16, wherein the first portions are parallel.

18. A door closer device according to any one of claims 1 to 11, wherein the first portions of the side edges are arcuate.

19. A door closer device according to any preceding claim, wherein the second portions of the side edges are inclined to the normal to the longitudinal axis of the chain.

20. A door closer device according to claim 19, wherein the facing second portions on adjacent links are inclined in opposite directions.

21. A door closer device according to any preceding claim, wherein the chain links further comprise back edges that extend between said first portions of the side edges and front edges that extend between the second portions of the side edges, the back and front edges being wholly or partially arcuate.

22. A door closer according to claim 21, wherein the back and front edges are straight.

23. A door closer according to claim any preceding claim wherein the chain comprises inner and outer links.

24. A door closer according to claim 23, wherein the outer links are of reduced height compared to the inner links.

**25.** A door closer according to claim 23 or 24, wherein the outer links are thicker than the inner links.

**26.** A door closer according to any preceding claim wherein the links are in the form of plates.

**27.** A door closer device for connection between a door leaf and a door frame, the closer device comprising a housing for receipt in one of the door leaf or the door frame, a chain defining a longitudinal axis and having a first end that is connected to the housing and a second end adapted to connect to the other of the door frame or the door leaf, and a biasing member acting between the chain and the housing so as to urge the chain into the housing, the chain comprising a plurality of pivotally connected inner and outer links, the outer link plates having a height less than that of the inner link plates.

**28.** A door closer device according to claim 27, wherein the outer link plates are thicker than the inner link plates.

**29.** A door closer device according to claim 27 or 28, wherein the housing defines a bore into which the chain is urged.

**30.** A door closer device according to any one of claims 27 to 29, wherein the chain links are interconnected by a plurality of transverse pins that pass through apertures in the links.

**31.** A door closer according to any one of claims 27 to 30, wherein the first end of the chain is connected to the housing via said biasing member.

**32.** A door closer according to any one of claims 27 to 31, wherein the apertures are formed in overlapping parts of the links.

**33.** A door closer device according to any one of claims 27 to 32, wherein the inner and outer links are in the form of plates and the relationship between the inner and outer links accords to the following formula:

$$h1 = a.h2$$

$$t2 = a^2.t1$$

where h1 is the height of the inner link e, t1 is the thickness of the inner link plate, h2 is the height of the outer link plate, t2 is the thickness of the outer link plate, and a is a constant in the range 1.1 to 1.5.

**34.** A door closer device substantially as hereinbefore described with reference to the accompanying drawings.

FIG 1
(Prior art)

FIG 2

FIG 3a

FIG 3b

FIG 3c

31

h1

t1

_FIG 4 a_

30

h2

t2

_FIG 4 b_

33
32       31
              30
         31

_FIG 4 c_

40

41

_FIG 5 a_

40

41

_FIG 5 b_

40

41

_FIG 5 c_

40

41

_FIG 5 d_

EP 1 715 126 A2